# EUROPÄISCHE PATENTSCHRIFT

(11) **EP 1 158 860 B1**
(45) Veröffentlichungstag und Bekanntmachung des Hinweises auf die Patenterteilung: **19.06.2002**
(21) Anmeldenummer: 00904675.6
(22) Anmeldetag: 15.02.2000
(51) Int. Cl.: A23C 9/00

(54) **VERFAHREN ZUR ENZYMATISCHEN LACTOSESPALTUNG, INSBESONDERE MITTELS MEMBRANDIFFUSIONSREAKTOREN**
METHOD FOR ENZYMATICALLY CLEAVING LACTOSE, IN PARTICULAR, BY USING MEMBRANE DIFFUSION REACTORS
PROCEDE DE DISSOCIATION ENZYMATIQUE DE LACTOSE, NOTAMMENT AU MOYEN DE REACTEURS A DIFFUSION PAR MEMBRANE

(30) Priorität: 04.03.1999 AT 37099
(43) Veröffentlichungstag der Anmeldung: 05.12.2001
(73) Patentinhaber: Lactoprot Alpenändische Milchindustrie und Handels-Aktiengesellschaft, 4775 Taufkirchen an der Pram (AT)
(72) Erfinder: NOVALIC, Senad, A-1190 Wien (AT); KULBE, Klaus, Dieter, A-1180 Wien (AT)
(74) Vertreter: Atzwanger, Richard, Dipl.-Ing. Patentanwalt
(86) Internationale Anmeldenummer: AT0000037
(87) Internationale Veröffentlichungsnummer: WO0051441

(56) Entgegenhaltungen:
- EP-A- 0 020 781
- EP-A- 0 687 732
- US-A- 3 753 725
- US-A- 4 007 283
- M. MORACCI: "Expression and extensive characterisation of beta-glycosidase from the extreme thermoacidophilic archaeon Sulfolubus solfataricus in Escheria coli" ENZYME AND MICROBIAL TECHNOLOGY, Bd. 17, Nr. 9, 1995, Seiten 992-997, XP000921127
- L. HUFFMAN: "Lactose hydrolysis in batch and hollow fibre membrane reactors" NEW ZEALAND JOURNAL OF DAIRY SCIENCE AND TECHNOLOGY, Bd. 20, Nr. 1, 1985, Seiten 57-63, XP000914020
- L. HUFFMAN: "Beta-galactosidase retention by hollow fiber membranes" JOURNAL OF DAIRY SCIENCE, Bd. 265, Nr. 6, 1982, Seiten 887-898, XP002141007 CHAPAIGN, ILLINOIS US
- P. CZERMAK: "Scale-up von Enzym-Membranreaktoren am Beispiel der kontinuierlichen Laktosehydrolyse" BIOENGINEERING, Bd. 8, Nr. 1, 1992, Seiten 47-52, XP000956043 in der Anmeldung erwähnt
- DATABASE WPI Section Ch, Week 199238 Derwent Publications Ltd., London, GB; Class B04, AN 1992-312515 XP002150923 & JP 04 218371 A (SNOW BRAND MILK PROD CO LTD), 7. August 1992 (1992-08-07)
- J. PRESONIL: "Performance of membrane fixed biocatalyst reactors" BIOTECHNOLOGY AND BIOENGINEERING, Bd. 31, Nr. 9, 1988, Seiten 913-921, XP000907535
- D. PRAZERES: "Enzymatic membrane bioreactors and their applications" ENZYME AND MICROBIAL TECHNOLOGY, Bd. 16, Nr. 9, 1994, Seiten 738-750, XP000920870

## Beschreibung

Die gegenständliche Erfindung betrifft ein Verfahren zur enzymatischen Lactosespaltung, insbesondere zur enzymatischen Lactosespaltung mittels Membrandiffusionsreaktoren.

Mit Hilfe eines solchen Verfahrens können einerseits Lactoselösungen behandelt werden und können andererseits Milch und Milchprodukte, wie Magermilch oder Molke, zu lactosereduzierten Produkten verarbeitet werden.

Da etwa 75 % der erwachsenen Weltbevölkerung lactoseintolerant sind, besteht ein sehr großer Bedarf an lactosereduzierten Milchprodukten. Zudem hat es sich herausgestellt, daß die Lactose der Milch oftmals auch von Tieren nicht vertragen wird, weswegen mit lactosearmen Milchprodukten in der Tierzucht bemerkenswerte Vorteile hinsichtlich der Ernährung und des Wachstums der Tiere erzielt werden. Schließlich wird darauf verwiesen, daß es bei Anhebung des Feststoffgehaltes der Milch auf über 30 % zu einer Destabilisierung der Proteinphase kommen kann. Ähnliche Nachteile ergeben sich z.B. in der Speiseeisindustrie, da es deshalb, da das Protein wegen der Kristallisation der Lactose bei niedrigen Temperaturen nur schwer wieder suspendiert werden kann, nicht möglich ist, Milch mit einem hohen Feststoffgehalt zu verwenden. Außerdem führt die Lactosekristallisation zu einer sog. Sandigkeit des Eises.

Lactose ist ein Disaccharid, welches durch das Enzym β-Glycosidase, wie β-Glucosidase und β-Galactosidase, in seine Bestandteile Glucose und Galactose gespalten werden kann. Die direkte Zugabe dieser Enzyme wird von vielen Konsumenten abgelehnt. Da sie zudem auch sensorische Nachteile mit sich bringen kann, wurde nach anderen Möglichkeiten zur enzymatischen Spaltung der Lactose gesucht.

Aus der DE 2151534 A1 ist es bekannt, ein Enzym auf oder in Trägern zu immobilisieren und die Milch oder das Milchprodukt mit diesen Feststoffen in Perkolationsanlagen zu behandeln. Es hat sich jedoch gezeigt, daß diese Anlagen zur Verblockung durch die Bestandteile der Milch neigen und daß außerdem ein mikrobieller Befall der Milch bzw. der Molke nur schwer zu verhindern ist. Zudem ist die Sterilisation der Anlagen äußerst aufwendig, insbes. im Hinblick darauf, daß bei Hitzebehandlungen auch das verwendete Enzym geschädigt wird.

EP-A-0 020 781 offenbart ein Verfahren zur enzymatischen Lactosespaltung mittels einer Diffusionsmembrane, welche eine Porengröße von 2,4 nm hat. Die Reaktionstemperatur ist 5°C bis 10°C.

US-A-4 007 283 offenbart ein Verfahren zur enzymatischen Lactosespaltung wobei das lactosespaltende Enzym ein thermostabiles Enzym ist und das Verfahren bei einer Temperatur von 55°C bis 60°C durchgeführt wird.

L. HUFFMAN: 'Lactose hydrolysis in batch and hollow fibre membrane reactors' NEW ZEALAND JOURNAL OF DAIRY SCIENCE AND TECHNOLOGY, Bd. 20, Nr. 1, 1985, Seiten 57-63 oder L. HUFFMAN: 'Beta-galactosidase retention by hollow fiber membranes' JOURNAL OF DAIRY SCIENCE, Bd. 265, Nr. 6, 1982, Seiten 887-898 offenbaren ein Verfahren zur enzymatischen Lactosespaltung wobei das lactosespaltende Enzym ein mesophiles Enzym ist und das Verfahren in einem Membranreaktor bei einer Temperatur von ca. 5°C durchgeführt wird.

Eine Verbesserung auf diesem Gebiet schien in der Verwendung von Membrandiffusionsreaktoren zusammen mit mesophilen Enzymen zu liegen. In derartigen Reaktoren ist die Milch von der Enzymlösung durch eine Membran, deren Porengröße eine Diffusion der Lactose in die Enzymlösung und eine Rückdiffusion der Spaltprodukte in die lactosearme Milch gestattet, getrennt. Es wird hiezu auf P. Czermak, BioEngineering 8, Seiten 47 bis 52, verwiesen. Prozesse dieser Art können bei Temperaturen bis zu maximal 45°C ablaufen.

Membrandiffusionsreaktoren sind häufig als Hohlfaser-Reaktoren ausgebildet, in welchen das zu behandelnde Produkt im Inneren der Fasern, welche von der Permeatlösung umgeben sind, strömt. Dabei ist das Enzym in der Permeatlösung enthalten. Bei Membrandiffusionsverfahren wird durch die Trennung der lactosehaltigen Substratlösung von der Enzymlösung neben mehreren anderen Vorteilen auch eine mögliche Inaktivierung des Enzyms durch die Milchbestandteile, nämlich durch Proteine und Restfette, verhindert. Von Bedeutung ist weiters die mögliche Erhöhung der Langzeitstabilität des Enzyms durch getrennte Behandlung der Enzymlösung sowie die Vereinfachung des Prozesses deshalb, da eine nachfolgende Abtrennung des Enzyms aus dem Produktstrom nicht erforderlich ist.

Auch bei diesen Anlagen besteht naturgemäß die Gefahr der mikrobiellen Infektion. Um diese zu vermeiden, wurde die Verwendung von dampfsterilisierbaren Membrandiffusionsreaktoren vorgeschlagen. Es wird hiezu auf P.Czermak, DECHEMA-Biotechnol. Conf.2, Seiten 133 bis 145, Elsevier Applied Science, London 1991, verwiesen. Es hat sich jedoch gezeigt, daß diese Reaktoren so aufwendig und teuer sind, daß sie für industrielle Verfahren derzeit nicht in Frage kommen.

Der gegenständlichen Erfindung liegt somit die Aufgabe zugrunde, ein Verfahren zu schaffen, durch welches die den bekannten Verfahren anhaftenden Nachteile vermieden werden. Dies wird erfindungsgemäß dadurch erzielt, daß als Enzym zur Lactosespaltung ein thermostabiles Enzym oder ein Gemisch thermostabiler Enzyme verwendet wird und daß das Verfahren bei einer Temperatur zwischen 50°C und 85°C durchgeführt wird.

In diesem Temperaturbereich, welcher der Pasteurisierungstemperatur gleichkommt, wird das Wachstum der meisten Mikroorganismen unterdrückt. Beim Arbeiten in einem Membrandiffusionsreaktor ergibt sich aufgrund der höheren Temperaturen eine gesteigerte Lactosediffusion, was zu einer besseren Ausnützung der Membran führt.

Vorzugsweise wird als Enzym eine thermostabile β-Glycosidase, z.B. eine β-Galactosidase bzw. β-Glucosidase, aus einem rekombinanten Mikroorganismus, verwendet. Eine solche β-Glycosidase wird z.B. aus Sulfolobus solfataricus oder Pyrococcus furiosus gewonnen. Es wird hiezu auf die Literaturstellen "Enzyme and Microbial Technology 17 992-997, 1995 von M.Moracci, R.Nucci, F.Febbraio, C.Vaccaro, N.Vespa, F. La Cara und M.Rossi, sowie "Journal of Bacteriology", Dec.1995 p.7105-1711 von W.G.B.Voorhorst, R.I.L.Eggen, E.J.Luesink und W.M. de Vos, verwiesen. Für diesen Zweck können jedoch auch andere thermostabile, lactosespaltende Enzyme eingesetzt werden.

Eine Arbeitstemperatur von 50°C bis 85°C bedeutet, daß immer noch extrem thermophile Mikroorganismen im Permeat vorliegen können. Es hat sich daher als vorteilhaft erwiesen, das Permeat mindestens teilweise sterilzufiltrieren und bzw. oder mit UV-Licht zu bestrahlen.

Die gegenständliche Erfindung betrifft weiters ein Verfahren zur enzymatischen Lactosespaltung mit Hilfe mesophiler Enzyme bei einer Temperatur von maximal 45°C in einem Membrandiffusionsreaktor, bei welchem Verfahren erfindungsgemäß das Permeat mindestens teilweise sterilfiltriert und bzw. oder mit UV-Licht bestrahlt wird. Dadurch ergibt sich gleichfalls der Vorteil der kontinuierlichen Verfahrensführung.

Beide Sterilisationsverfahren, nämlich die Sterilfiltration und die UV-Bestrahlung, sind an sich zum Zweck der Befreiung von Mikroorganismen bekannt, jedoch wurden sie bisher im Zusammenhang mit der Lactosespaltung in Membrandiffusionsreaktoren nicht eingesetzt. Dies ist offenbar darauf zurückzuführen, daß nur eine sehr sorgfältige Verfahrensführung dazu führt, daß nicht gleichzeitig mit der Abtötung von Mikroorganismen auch die Enzyme inaktiviert werden.

Zu den Membrandiffusionsverfahren wird darauf verwiesen, daß die erforderliche Membranfläche und die Kosten der Enzymlösung Faktoren sind, welche die Wirtschaftlichkeit dieses Verfahrens stark beeinflussen. Jede Maßnahme, durch welche die Stabilität der Enzymlösungen erhöht wird, ist als wesentliche Einsparung anzusehen. Da die Stoffwechselprodukte von Mikroorganismen die Enzyme inaktivieren können, trägt eine kontinuieriche Sterilisation der Permeatlösung ganz wesentlich zur Stabilisierung der Enzymlösung bei.

Die Membranfläche, welche zur Herstellung einer bestimmten Menge lactosearmer Milch pro Zeiteinheit erforderlich ist, hängt in erster Linie von der Lactosediffusionsgeschwindigkeit ab. Dabei spielen neben verschiedenen chemisch-physikalischen Faktoren, wie Temperatur, Lactosekonzentration usw., auch modulspezifische bzw. membranspezifische Eigenschaften eine wichtige Rolle. Hierzu gehören beispielsweise der Hohlfaserdurchmesser, die Porengröße der Membran und das Membranmaterial. Bei der Entwicklung der erfindungsgemäßen Technologie stellt somit die Auswahl eines geeigneten Membranmoduls einen wichtigen Aspekt dar. Es wird außerdem darauf verwiesen, daß die angeführten Einflußfaktoren teilweise voneinander abhängig sind. So kann beispielsweise durch die Erhöhung der Enzymkonzentration eine teilweise Reduzierung der Membranfläche erreicht werden. Bei einer gewünschten Qualität des Endproduktes (Hydrolysegrad) ist somit nur die Gesamtwirtschaftlichkeit für die Auswahl der Verfahrensführung ausschlaggebend.

Das erfindungsgemäße Verfahren ist nachstehend anhand von Diagrammen und Darstellungen näher erläutert. Es zeigen:
- Fig. 1: den Fermentationsverlauf von E. coli BL21 (DE3) zur Produktion rekombinanter β-Glycosidase aus Pyrococcus furiosus,
- Fig. 2: die schematische Darstellung einer mit Membrandiffusionsverfahren arbeitenden Anlage,
- Fig. 3: die schematische Darstellung einer mit Membrandiffusionsverfahren arbeitenden Anlage, bei welcher das Permeat durch eine Sterilfiltration und bzw. oder eine UV-Bestrahlungseinheit geführt wird, und
- Fig. 4: eine graphische Darstellung des Einflusses der UV-Bestrahlung auf Keimzahl und Enzymaktivität.

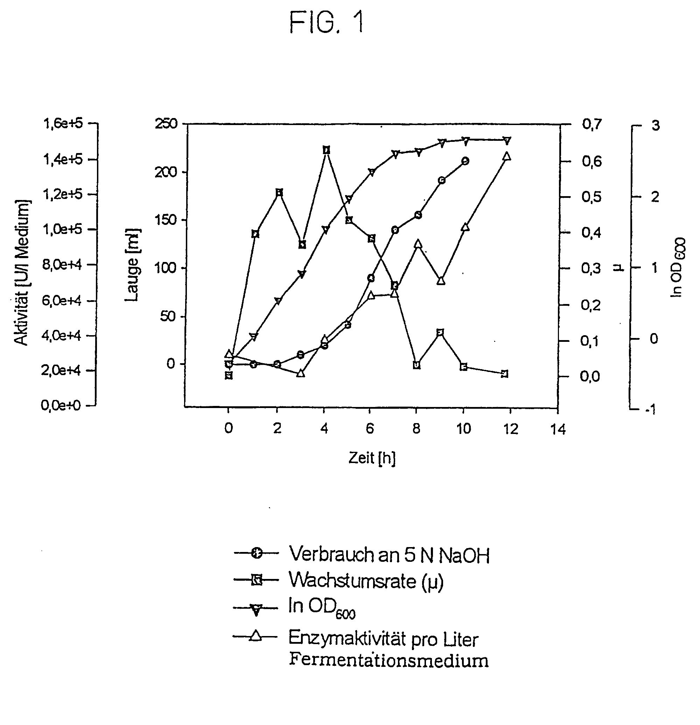

Die vorzugsweise verwendeten Enzyme wurden aus rekombinanten E. coli gewonnen. Beispielsweise erfolgte die Produktion der β-Glycosidase aus Pyrococcus furiosus durch Fermentation des rekombinanten E. coli BL 21 (DE3). Aus dem in Fig. 1 dargestellten Diagramm ist ein typischer Fermentationsverlauf ersichtlich. Unter Optimalbedingungen lag die Halbwertszeit des Enzyms aus S. solfataricus bei ca. 10 Tagen, wogegen das Enzym aus Pyrococcus furiosus unter den gleichen Bedingungen mehr als zwei Monate stabil war. Das pH-Optimum lag in beiden Fällen zwischen 5,0 und 6,0, was für die Anwendung zur Lactosespaltung in Milch (pH ca 6,6) nahezu optimal ist. Der Einfluß von hohen Ionenkonzentrationen bewirkt bei vielen mit Enzymen arbeitenden Prozessen eine Reduktion der Enzymaktivität. In der Milch sind im Durchschnitt insgesamt ca 200 mM Kalium, Calcium, Magnesium und Natrium enthalten. Im vorliegenden Fall reduziert sich die Aktivität der β-Glycosidase aus S. solfataricus auf ca 85 %, wogegen die Aktivität der β-Glycosidase aus P. furiosus um mehr als ein Drittel reduziert wird. Diese Werte sind für die Durchführung des erfindungsgemäßen Verfahrens durchaus zufriedenstellend. Was die Produktion der Enzyme betrifft, so wurden im Schüttelkolben 3000 U/l Kulturlösung bzw. 24500 U/l erzielt. Im 151-Fermenter konnte die Ausbeute für die β-Glycosidase aus P. furiosus auf mehr als das Vierfache erhöht werden.

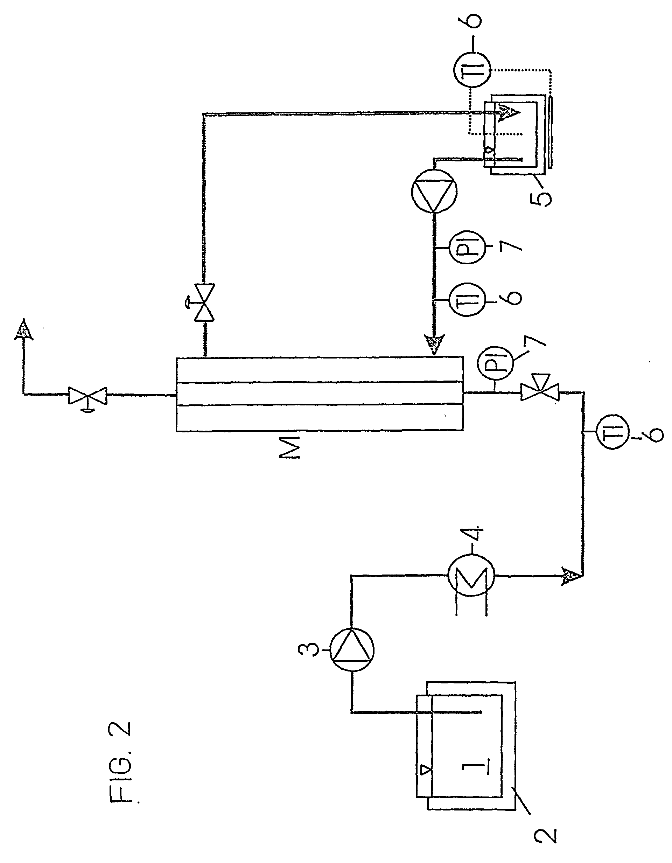

Die Überprüfung und Optimierung der Verfahrensbedingungen erfolgten an einer Laboranlage eines Membrandiffusionsreaktors, welcher nachstehend anhand der Fig. 2 erläutert ist. Die Milch wird kontinuierlich aus einem Vorratsbehälter 1, welcher sich in einem Kühlbad 2 befindet, entnommen und über eine Pumpe 3 und einen Wärmetauscher 4 in den Membrandiffusionsreaktor M geleitet. Währenddessen wird die Enzymlösung aus einem Enzymbehälter 5 im Gleichstrom ebenfalls durch den Membranreaktor M geleitet. Wesentlich sind der Druck und die Temperatur der Anlage, welche u.a. mit Hilfe von Temperaturfühlern 6 und Manometern 7 überwacht werden. Die Enzymlösung wurde über das externe Vorratsgefäß im Kreis gepumpt.

Als Basis für die vorliegenden Arbeiten wurden vorerst folgende verfahrenstechnische Parameter gewählt:
- Porengröße: entsprechend ca. 5000 Dalton ("cut off")
- Faserinnendurchmesser: ca. 200 Mikrometer
- spezifische Hydrolyse-: ca. 2 Liter Milch pro m²
- Leistung: Membranfläche und Stunde
(bei ca. 80% Hydrolysegrad)

Es zeigte sich jedoch, daß für das erfindungsgemäße Verfahren auch Membranen mit größeren Poren (entsprechend ca. 10000 Dalton) eingesetzt werden können. Allerdings waren bei einer Porengröße entsprechend ca. 30000 Dalton bereits Enzymverluste merkbar. Der Innendurchmesser der Fasern konnte auch bei 500 Mikrometer liegen. Versuche ergaben, daß dabei eine etwa gleiche Hydrolyseleistung wie bei einem Innendurchmesser der Fasern von 200 Mikrometer erzielbar war.

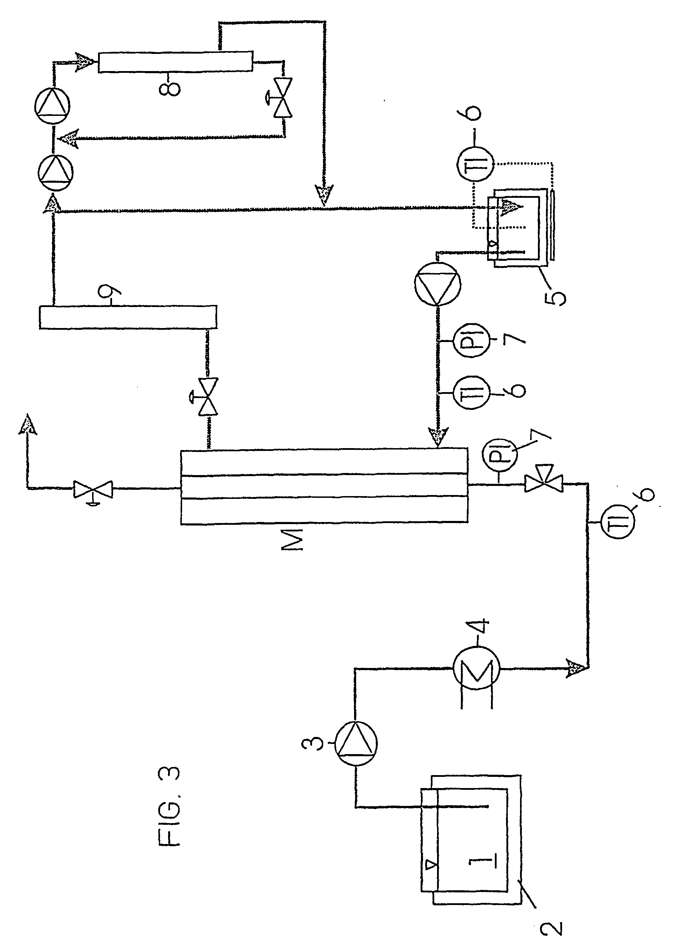

In Fig. 3 ist eine Anlage gemäß Fig. 2 dargestellt, wobei zusätzlich die Permeatlösung in einer Vorrichtung 8 einer Sterilfiltration bzw. in einer Vorrichtung 9 einer UV-Bestrahlung ausgesetzt wird.

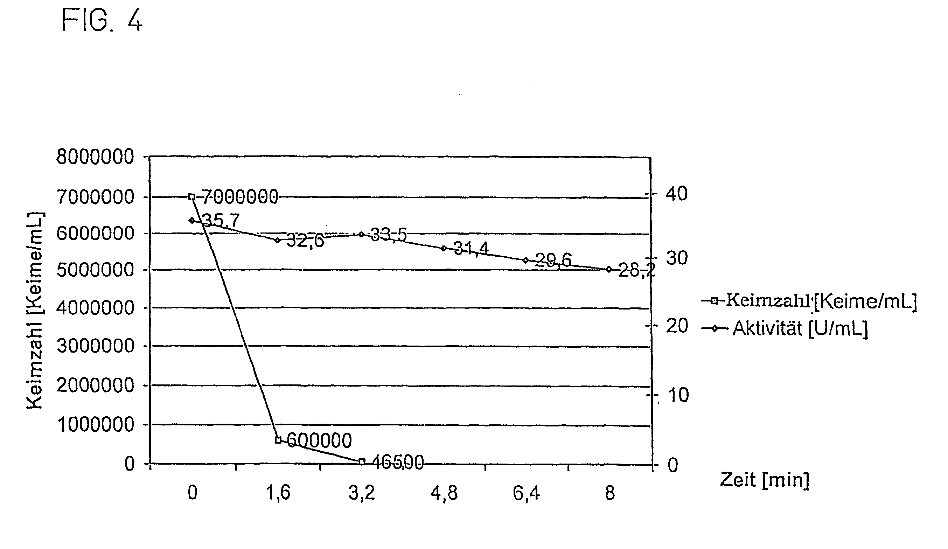

Aus dem Diagramm gemäß Fig. 4 ist ersichtlich, daß bei Einwirkung von UV-Licht die Keimzahl innerhalb kürzester Zeit rasch absinkt. Die Enzymaktivität bleibt jedoch nahezu stabil, was für die Verwendbarkeit dieses Behandlungsverfahrens ausschlaggebend ist.

Nachstehend sind sowohl für die Lactosehydrolyse mit thermostabilen Enzymen als auch für das analoge Verfahren mit mesophilen Enzymen jeweils Beispiele angegeben.

### BEISPIEL 1

### Lactosehydrolyse mit thermostabilen Enzymen

In einer Anlage gemäß Fig. 2 wurde die Magermilch mit Hilfe eines Wärmetauschers auf ca. 65°C (338 K) erwärmt und durch den Hohlfasermodul gepumpt.

Die Hohlfasern hatten einen Innendurchmesser von ca. 0,0005 m. Der Milchdurchfluß wurde auf ca. 0,002 m³ pro m² Membranfläche und Stunde eingestellt, wobei ein Hydrolysegrad von etwa 80% erzielt wurde. Wie dies aus Fig. 2 ersichtlich ist, wird die Enzymlösung im Kreis gepumpt, wobei die Temperatur von ca. 338 K eingehalten wurde. Bei dieser relativ hohen Prozeßtemperatur wird das Wachstum von Mikrorganismen weitgehend verhindert. Die Lactosehydrolyse kann somit über einen längeren Zeitraum kontinuierlich geführt werden. Die Halbwertszeit des eingesetzten thermophilen rekombinanten Enzyms aus Pyrococcus furiosus betrug ca. zwei Wochen. In diesen Abständen wurde die gesamte Anlage einer Reinigung und Spülung unterzogen.

### Beispiel 2

### Lactosehydrolyse mit mesophilen Enzymen.

### A. Sterilfiltration der Enzymlösung

Die verfahrenstechnische Durchführung des Prozesses erfolgte in einer Anlage gemäß Fig. 3. Die Anlage entspricht mit Ausnahme der Zusatzeinrichtungen für die Sterilfiltration bzw. die UV-Bestrahlung im wesentlichen der Anlage von Beispiel 1. Die Milch wurde mittels eines Wärmetauschers auf ca. 30°C (303 K) erwärmt und durch einen Hohlfasermodul gepumpt. Die Hohlfasern wiesen den gleichen Innendurchmesser wie in der Anlage von Beispiel 1 auf und der Milchdurchfluß wurde in der gleichen Weise eingestellt. Da bei einer Temperatur von 30°C die Mikroorganismen nahezu ideale Wachstumsbedingungen in der zuckerhaltigen Enzymlösung vorfinden, ist ein kontinuierlicher Prozeß ohne Sterilisation nahezu nicht durchführbar. Deshalb wurde die Enzymlösung kontinuierlich sterilfiltriert. Im vorliegenden Fall wurde ein "Cross-flow"-Mikrofiltrationsmodul mit einer Porengröße von ca. 0,2 µm eingesetzt. Wesentlich dabei war, daß die Mikroorganismen vom eingesetzten Filter zurückgehalten wurden und daß die Enzyme den Sterilfilter ungehindert passieren konnten.

### B. UV-Bestrahlung der Enzymlösung

In diesem Beispiel wurde die Enzymlösung mittels UV-Bestrahlung (254 nm) in einer handelsüblichen zylindrischen Bestrahlungskammer mit regelbarer Bestrahlungsleistung behandelt. Die Bestrahlungslampe hatte eine Leistung von 25 Watt. Die Einstellung der Bestrahlungsdosis mußte sehr sorgfältig erfolgen, um die Enzymlösung dabei nicht wesentlich zu inaktivieren.

### C. Sterilfiltration und UV-Bestrahlung der Enzymlösung

Die Effizienz des Systems konnte dadurch gesteigert werden, daß das Verfahren mit Sterilfiltration und bzw. oder UV-Bestrahlung der Enzymlösung durchgeführt wurde. Die Gesamtkeimzahl konnte über mehrere Stunden auf einem sehr niedrigen Niveau gehalten werden. Die Lebensdauer der Enzyme betrug einige Tage.

## Patentansprüche

1. Verfahren zur enzymatischen Lactosespaltung in Membrandiffusionsreaktoren, bei welchem als lactosespaltendes Enzym ein thermophiles Enzym oder ein Gemisch thermophiler Enzyme im Permeatraum verwendet wird und das Verfahren bei einer Temperatur zwischen 50°C und 85°C durchgeführt wird oder bei welchem als lactosespaltendes Enzym ein mesophiles Enzym oder ein Gemisch mesophiler Enzyme im Permeatraum verwendet wird und das Verfahren bei einer Temperatur von maximal 50°C durchgeführt wird, dadurch gekenzeichnet, daß das Permeat mindestens teilweise sterilfiltriert und/oder mit UV-Licht bestrahlt wird.

2. Verfahren nach Anspruch 1, **dadurch gekennzeichnet, daß** als Enzym eine thermostabile β-Glycosidase, wie eine β-Galactosidase bzw. eine β-Glucosidase, aus einem rekombinanten Mikroorganismus verwendet wird.

3. Verfahren nach Anspruch 2, **dadurch gekennzeichnet, daß** als Enzym eine thermostabile β-Glycosidase, vorzugsweise aus Sulfolobus solfataricus oder Pyrococcus furiosus, verwendet wird.

4. Verfahren nach Anspruch 2, **dadurch gekennzeichnet, daß** als Enzym eine rekombinante thermostabile β-Glycosidase, vorzugsweise aus E. coli BL21 (DE3), Saccharomyces cerevisiae, Pichia stipitis oder Lactococcus lactis, verwendet wird.

5. Verfahren nach einem der Ansprüche 1 bis 4, **dadurch gekennzeichnet, daß** die Sterilfiltration bei einer Porengröße von ca. 0,2 µm vorgenommen wird.

6. Verfahren nach einem der Ansprüche 1 bis 5, **dadurch gekennzeichnet, daß** die Enzymlösung durch ein "Cross-flow"-Mikrofiltrationsmodul geleitet wird.

7. Verfahren nach einem der Ansprüche 1 bis 6, **dadurch gekennzeichnet, daß** das Permeat über die Sterilfiltration und/oder UV-Bestrahlung im Kreis geführt wird.

8. Verfahren nach einem der Ansprüche 1 bis 7, **dadurch gekennzeichnet, daß** es kontinuierlich durchgeführt wird.

9. Verfahren zur Herstellung eines lactosereduzierten Milchproduktes, **gekennzeichnet durch** die Anwendung eines der Verfahren nach den Ansprüchen 1 bis 8.

10. Verfahren nach Anspruch 9, **dadurch gekennzeichnet, daß** als Ausgangssubstrat Milch jeglicher Fettstufe verwendet wird.

11. Verfahren nach Anspruch 9, **dadurch gekennzeichnet, daß** als Ausgangssubstrat Molke sowie Molkefraktionen verwendet werden.

12. Verfahren nach einem der Ansprüche 1 bis 11, **dadurch gekennzeichnet, daß** als Ausgangssubstrat Lactoselösungen verwendet werden.

13. Verfahren nach einem der Ansprüche 9 bis 12, **dadurch gekennzeichnet, daß** die Ausgangssubstrate vorkonzentriert werden.

14. Verfahren nach einem der Ansprüche 1 bis 13, **dadurch gekennzeichnet, daß** die Membranen zur Vermeidung von Enzymverlusten durch Milchproteine oder andere Proteine vorbelegt werden.

## Claims

1. A process for enzymatic lactose cleavage in membrane diffusion reactors, in which a thermophilic enzyme or a mixture of thermophilic enzymes in the permeate chamber is used as the lactose-cleaving enzyme and the process is performed at a temperature of between 50°C and 85°C or in which a mesophilic enzyme or a mixture of mesophilic enzymes in the permeate chamber is used as the lactose-cleaving enzyme and the process is performed at a temperature of at most 50°C, **characterised in that** the permeate is at least partially sterilised by filtration and/or irradiated with UV light.

2. A process according to claim 1, **characterised in that** a thermostable β-glycosidase, such as a β-galactosidase or a β-glucosidase, from a recombinant microorganism is used as the enzyme.

3. A process according to claim 2, **characterised in that** a thermostable β-glycosidase, preferably from *Sulfolobus solfataricus* or *Pyrococcus furiosus*, is used as the enzyme.

4. A process according to claim 2, **characterised in that** a recombinant thermostable β-glycosidase, preferably from *E. coli* BL21 (DE3), *Saccharomyces cerevisiae, Pichia stipitis* or *Lactoccus lactis*, is used as the enzyme.

5. A process according to one of claims 1 to 4, **characterised in that** sterilisation by filtration is performed with a pore size of approx. 0.2µm.

6. A process according to one of claims 1 to 5, **characterised in that** the enzyme solution is passed through a "cross-flow" microfiltration module.

7. A process according to one of claims 1 to 6, **characterised in that** the permeate is circulated via sterilisation by filtration and/or UV radiation.

8. A process according to one of claims 1 to 7, **characterised in that** it is performed continuously.

9. A process for producing a reduced lactose dairy product, **characterised by** the application of one of the processes according to claims 1 to 8.

10. A process according to claim 9, **characterised in that** milk of any fat content is used as the starting substrate.

11. A process according to claim 9, **characterised in that** whey and whey fractions are used as the starting substrate.

12. A process according to one of claims 1 to 11, **characterised in that** lactose solutions are used as the starting substrate.

13. A process according to one of claims 9 to 12, **characterised in that** the starting substrates are preconcentrated.

14. A process according to one of claims 1 to 13, **characterised in that** the membranes are precoated with milk proteins or other proteins to prevent enzyme losses.

## Revendications

1. Procédé de désintégration enzymatique de lactose dans des réacteurs à diffusion à membrane dans lequel on utilise comme enzyme de dissociation de lactose une enzyme thermophile ou un mélange d'enzymes thermophiles dans la chambre du perméat, et le procédé est conduit à une température comprise entre 50 °C et 85 °C, ou dans lequel on utilise comme enzyme de désintégration de lactose une enzyme mésophile ou un mélange d'enzymes mésophiles dans la chambre du perméat, et le procédé est conduit à une température de 50 °C au maximum, **caractérisé en ce que** le perméat est filtré de manière stérile au moins partiellement et/ou est irradié avec une lumière UV.

2. Procédé selon la revendication 1, **caractérisé en ce qu'**on utilise comme enzyme une béta-glycosidase thermostable, telle qu'une béta-galactosidase ou une béta-glucosidase, provenant d'un micro-organisme de recombinaison.

3. Procédé selon la revendication 2, **caractérisé en ce qu'**on utilise comme enzyme une béta-glycosidase thermostable, de préférence de sulfolobus solfataricus ou pyrococcus furiosus.

4. Procédé selon la revendication 2, **caractérisé en ce qu'**on utilise comme enzyme une béta-glycosidase thermostable de recombinaison, de préférence de E. Coli BL21 (DE3), saccharomyces cerevisiae, Pichia stipitis ou Lactococcus lactice.

5. Procédé selon l'une des revendications 1 à 4, **caractérisé en ce que** la filtration stérile s'effectue avec une grandeur des pores d'environ 0,2 µm.

6. Procédé selon l'une des revendications 1 à 5, **caractérisé en ce que** la solution d'enzyme est acheminée à travers un module de micro-filtration "cross-flow".

7. Procédé selon l'une des revendications 1 à 6, **caractérisé en ce qu'**on fait circuler le perméat à travers la filtration stérile et/ou le rayonnement UV.

8. Procédé selon l'une des revendications 1 à 7, **caractérisé en ce qu'**il est mis en oeuvre en continu.

9. Procédé de production d'un produit laitier réduit en lactose, **caractérisé par** la mise en oeuvre de l'un des procédés selon les revendications 1 à 8.

10. Procédé selon la revendication 9, **caractérisé en ce qu'**on utilise comme substrat de départ du lait de n'importe quelle teneur en matières grasses.

11. Procédé selon la revendication 9, **caractérisé en ce qu'**on utilise comme substrat de départ du petit-lait ainsi que des fractions de petit-lait.

12. Procédé selon l'une des revendications 1 à 11, **caractérisé en ce qu'**on utilise comme substrat de départ des solutions de lactose.

13. Procédé selon l'une des revendications 9 à 12, **caractérisé en ce que** les substrats de départ sont pré-concentrés.

14. Procédé selon l'une des revendications 1 à 13, **caractérisé en ce que** pour éviter des pertes d'enzymes, les membranes sont pré-garnies de protéines du lait ou d'autres protéines.
